# EUROPEAN PATENT SPECIFICATION

(11) **EP 0 834 828 B1**
(45) Date of publication and mention of the grant of the patent: **03.03.2004**
(21) Application number: 97115166.7
(22) Date of filing: 02.09.1997
(51) Int. Cl.: G06K 15/02, B41J 3/54

(54) **Hybrid printer equipped with a plurality of printing mechanisms and method of controlling it**
Hybrid-Drucker mit einer Mehrzahl von Druckmechanismen, sowie Verfahren zum Betrieb eines solchen Druckers
Imprimante hybride équipée de plusieurs mécanismes d'impression, et sa méthode de contrôle

(30) Priority: 02.09.1996 JP 23232596
(43) Date of publication of application: 08.04.1998
(73) Proprietor: SEIKO EPSON CORPORATION, Tokyo 163 (JP)
(72) Inventor: Aruga, Kazuhisa, Suwa-shi, Nagano-ken 392 (JP); Koakutsu, Naohiko, Suwa-shi, Nagano-ken 392 (JP)
(74) Representative: Hoffmann, Eckart, Dipl.-Ing.

(56) References cited:
- EP-A- 0 654 757
- EP-A- 0 729 113
- US-A- 4 874 264
- PATENT ABSTRACTS OF JAPAN vol. 013, no. 577 (M-910), 20 December 1989 & JP 01 242282 A (TOKYO ELECTRIC CO LTD), 27 September 1989

## Description

This invention relates to the control and configuration of a compound or hybrid printer, i.e., a printer having two or more printing mechanisms mounted therein.

When the cover of a printer is opened during printing to change or add printing paper, a correct printing processing can no longer be assured. Because of this, the personal computer or other host device to which the printer is connected is notified of the printer status by sending a busy signal indicating that correct processing of data being transferred cannot be assured. Specifically, many printers indicate this busy state by setting the data terminal ready (DTR) signal inactive. The printer also executes error processing that interrupts printing after completing printing of the line in progress because it cannot be guaranteed, that printing can be continued after the cover is opened.

EP-A-0 652 533 discloses a printer having means for detecting the condition or states of the printer and for sending status information including a plurality of status bytes representing the detected states to a host device upon request from the latter. EP-A-0 654 757 discloses a similar printer additionally including an ASB (Automatic Status Back) function wherein the status of the printer is automatically sent to the host device in response to a change in any of the printer conditions represented by those status bytes. While both of these printers include a single printing mechanism they are capable of printing on a variety of different recording media, such as continuous or roll paper, slip forms, etc.. One of these recording media may be selected by a corresponding paper selection command from the host device. The status bytes include respective bytes related to those different recording media and indicating whether the respective recording medium is selected or not, is present or absent, or whether the printer is in a wait state waiting for the particular recording medium to be inserted. The status bytes further include an off-line cause status byte indicating the reason, if any, for an off-line state of the printer.

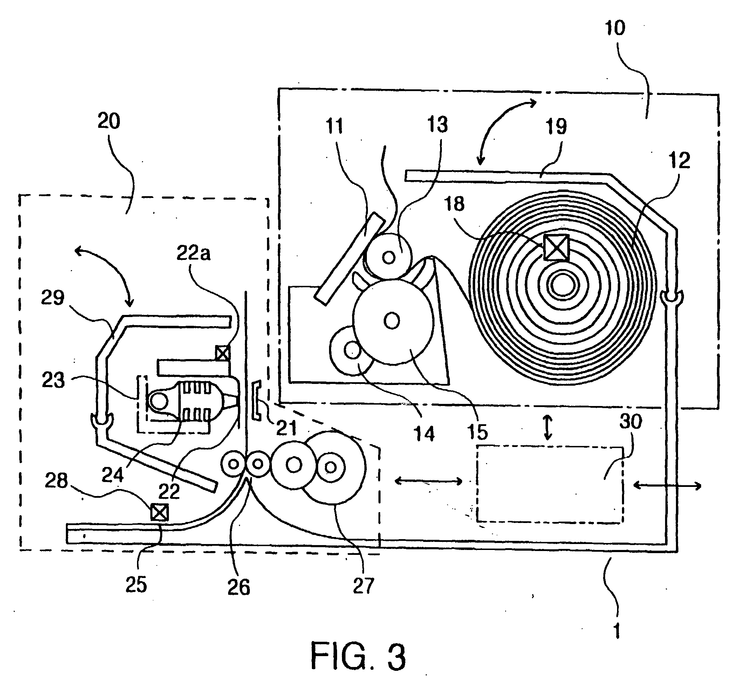

Hybrid printers having two or more printing mechanisms as shown in FIG. 3 have been developed in recent years. Examples of hybrid printers are disclosed in JP-A-5-124278, JP-Y-5-12863, JP-A-4-148953 and EP-A-0 785 080 (the latter forming prior art according to Art. 54(3) EPC). A printer according to the preamble of claim 1 is known from US-A-4,874,264. Such hybrid printer 1 typically has non-impact type thermal printing mechanism 10 and impact type wire dot printing mechanism 20 as well as control circuit 30 for controlling both printing mechanisms 10 and 20 based on data transferred from a host device. Thermal printing mechanism 10 comprises thermal head 11, paper feed roller 13 for feeding thermal paper (roll paper) 12 to thermal head 11, and paper feed motor 14 and speed reducing gear 15 for driving paper feed roller 13. Wire dot printing mechanism 20 comprises print head (wire dot head) 24 disposed opposite platen 21 with ink ribbon 22 between them and moved left and right (perpendicular to the plane of the drawing in Fig. 3) by carriage 23 driven by a motor not shown in the figure, paper feed roller 26 for feeding slip form 25 to this print head 24, feed motor 27 and a gear set for driving paper feed roller 26.

In this type of hybrid printer 1, customer receipts, for example, are printed on thermal paper 12, which is provided in rolls, using thermal printing mechanism 10, and slip forms 25 such as checks and vouchers are printed using wire dot printing mechanism 20. Two different types of documents can therefore be printed by one printer 1, thus making the printer useful for POS terminals. Other configurations are possible such as using thermal printing mechanism 10 additionally for printing journals for preserving store sales records and using wire dot printing mechanism 20 additionally to perform authentication printing, in which case four types of printing could be performed by one printer.

In order to make full use of its functionality, such hybrid printer having two or more printing mechanism requires that a new control method for error processing be developed. For example, when either cover 19 of thermal printing mechanism 10 is opened to add paper or cover 29 of wire dot printing mechanism 20 is opened to replace ink ribbon 22, it is desirable to change the error processing depending on which cover is opened.

For example, since feeding of the paper in thermal printing mechanism 10 is performed by turning the platen (formed by paper feed roller 13), it is desirable to stop printing immediately when it is detected that cover 19 has been opened and the platen has moved away from the paper, but since printing can be continued in wire dot printing mechanism 20 even if opening of cover 29 is detected, if it is for a short period, it is desirable to complete printing of the line being printed in order to preserve data.

Also, when cover 19 is closed again after stopping printing in response to the cover being opened, form feeding before printing is resumed cannot be performed in thermal printing mechanism 10 because roll paper is used. On the other hand, in wire dot printing mechanism 20, when slip forms are used it is desirable that printing be restarted by setting slip form 25 at the printing location after form feed processing.

If a busy signal is output when one of the covers (19, 29) is opened in a prior art hybrid printer, data can no longer be transferred from the host device to the printer even if the printing mechanism whose cover has not been opened can still be used. Therefore, in order to effectively utilize a plurality of printing mechanisms integrated in one hybrid printer, it is desirable to output a busy signal taking the respective states of the printing mechanisms into consideration.

It is an object of this invention to provide a hybrid printer and a method of controlling it in which error processing suited to the respective printing mechanism can be quickly performed. It is another object of this invention to provide a hybrid printer and a method of controlling it capable of preventing such problems as loss of data transferred from a host device.

These objects are achieved with a hybrid printer as claimed in claim 1 and a method as claimed in claim 11. Preferred embodiments of the invention are subject-matter of the dependent claims.

In accordance with this invention, a hybrid printer is configured such that it pays attention to only the state of the printing mechanism selected by the host device and another printing mechanism cannot hinder processing by the printer as a whole. This allows the host device to be notified of the state of the printing mechanism selected by the host device, and therefore the operation of the host device is not affected by the state of printer mechanisms other than the selected printing mechanism.

The selection means may select the printing mechanism to perform printing processing based on the data received from the host device. By notifying the host device of the state of the printing mechanism that will perform printing processing, it becomes possible for the host device to perform appropriate processing such as immediately stopping the transmission of print data in the event there is a problem with said printing processing, thus improving data integrity. In this case, it is desirable that the interface circuit, which manifests off-line or on-line, notify the host device. This facilitates real-time processing by the hardware, thus further enhancing data integrity.

By making the selection means responsive to a first command for selecting the printing mechanism to perform printing processing and a second command for selecting the printing mechanism that is the subject of state notification it is possible to independently select the printing mechanism to perform printing processing and the printing mechanism whose state is to be notified, which makes it possible to notify the host device of the state of other printing mechanisms even during printing processing. Therefore, since the state of other printing mechanisms can be considered when determining the next printing processing, jobs can be efficiently allocated.

When error processing is performed according to the selected printing mechanism, if an error should occur in the printing mechanism performing printing processing, then it becomes possible to quickly perform error processing suited to said printing mechanism. If an error state should occur in a printing mechanism not involved in printing processing, error processing is not performed immediately. This makes it possible to prevent interruption of printing processing and realize efficient printing processing.

Preferably the selection means uses a correspondence table that stores the correspondence between the printing mechanisms and the type or types of recording medium on which each printing mechanism prints for selecting a printing mechanism based on a recording medium selection command. This makes it possible to maintain compatibility at the command level with prior art printers that use a single printing mechanism, thus allowing the host device to control the printer device without recognizing the difference between printing mechanisms.

Preferred embodiments of the invention and further objects and advantages achieved by the invention will be described below with reference to the drawings.
- FIG. 1: is a block diagram showing an outline of the control configuration of the hybrid printer of an embodiment of this invention.
- FIG. 2: is a block diagram showing an outline of the control configuration of the hybrid printer of another embodiment of this invention.
- FIG. 3: is a cross section showing an outline of the printing mechanisms of the hybrid printer.
- FIG. 4: is a flowchart showing notification control of the off-line state of the hybrid printer shown in FIG. 1 and Fig. 2.
- FIG. 5: is a flowchart showing error processing of the thermal printing mechanism of the hybrid printer shown in FIG. 1 and Fig. 2.
- FIG. 6: is a flowchart showing error processing of the wire dot printing mechanism of the hybrid printer shown in FIG. 1 and Fig. 2.

Preferred embodiments of the invention are described below using, by way of example, hybrid printer 1 comprising thermal printing mechanism 10 and wire dot printing mechanism 20 shown in FIG. 3.

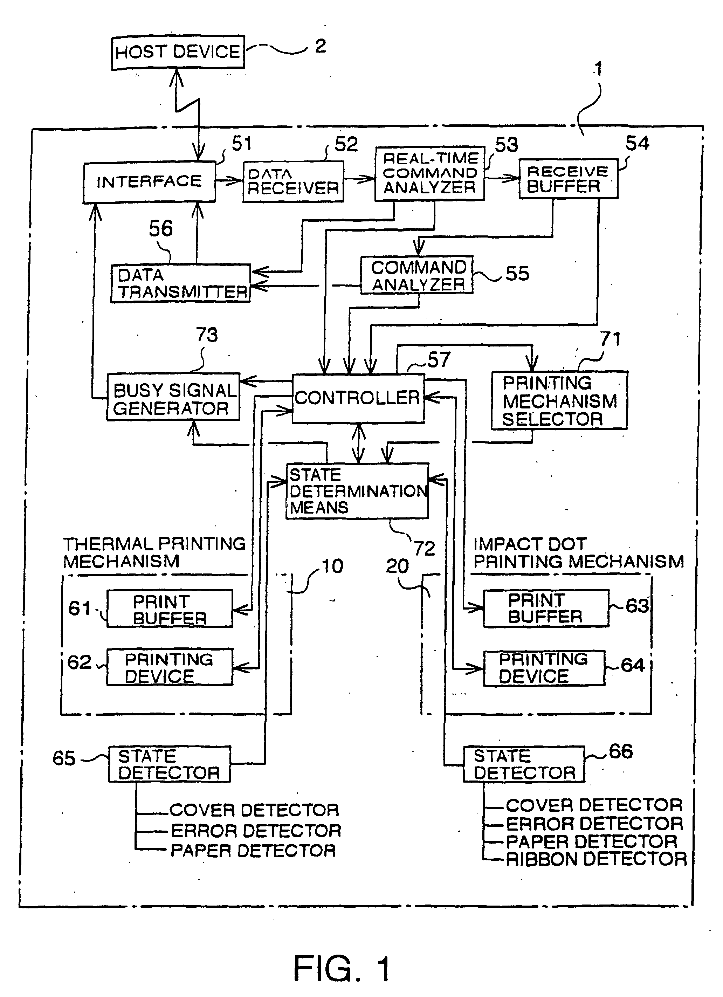

As shown in FIG. 1, hybrid printer 1 is connected to host device 2 and operates based on data transmitted from host device 2. Hybrid printer 1 comprises interface 51 connected to host device 2, and when data is received at interface 51, an interrupt is generated and data receiver 52 receives the data from interface 51. The data obtained from interface 51 pass through real-time command analyzer 53 during the processing of this interrupt. After having been analyzed, the data including commands and print data are stored in receive buffer 54.

When real-time command analyzer 53 recognizes a real-time command in the data from data receiver 52, it causes a pre-defined process corresponding to the recognized real-time command to be executed. Thus, when host device 2 sends a real-time command, the real-time command is detected before being transferred to receive buffer 54, and the process determined by this real-time command, such as changing the paper selection or sending the status data of the printer to the host device via data transmitter 56, can be immediately executed.

Data stored in receive buffer 54 is extracted piece by piece and each piece of data is analyzed by command analyzer 55. If the analyzed data code is a control command, then the processing corresponding to that command is executed by controller 57. When it represents print data, the printing mechanism to be used for printing the data is selected by printing mechanism selector 71 based on the type of paper previously selected by a paper selection command from host device 2. In this embodiment printing mechanism selector 71 selects the printing mechanism based on a table including the correspondence between various paper types, e.g., slip form or customer receipt, and the printing mechanism to be used with each paper type (see the Table below). In the embodiment of Fig. 1, the data is then stored in a print buffer of the selected printing mechanism. Note that the print data may either be text data, i.e., in the form of character codes, or graphics data, i.e., image data. In the former case, the character codes are developed into image data by a character generator or other known means (assumed to be part of controller 57 in this embodiment) before they are stored in the print buffer. For example, when data to be printed on a customer receipt appears in receive buffer 54, it is stored in print buffer 61 of thermal printing mechanism 10, and when data to be printed on a slip form appears in receive buffer 54, it is stored in print buffer 63 of wire dot printing mechanism 20.

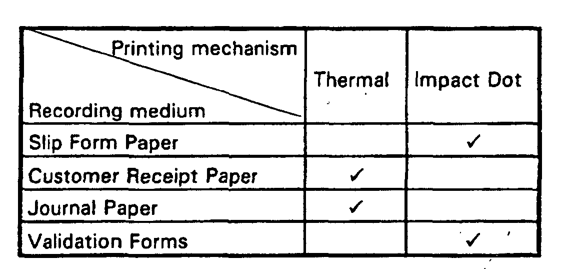

When a certain amount of data has been stored in the selected print buffer 61 or 63, controller 57 controls the printing device 62 or 64 of the selected printing mechanism, i.e., thermal printing mechanism 10 or wire dot printing mechanism 20, to print the data form the selected print buffer 61 or 63. Each printing device may have a known configuration comprising a print head, paper feed mechanism, inking device, and other components such as a paper cutter.

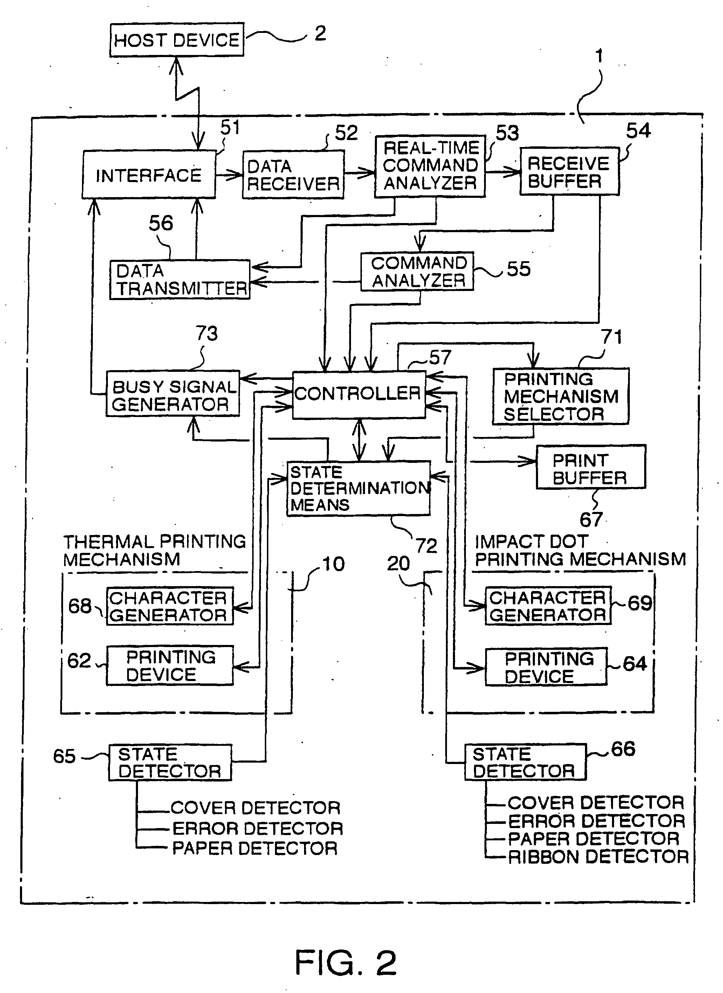

In the embodiment described above and shown in Fig. 1, a separate print buffer is provided for each printing mechanism. When the printing processing by the plurality of printing mechanisms is not performed in parallel, the invention can be realized according to another embodiment, shown in Fig. 2, by using a common print buffer 67 for both (all) printing mechanisms. In this case, until the printing processing of one printing mechanism is completed, printing processing by the other printing mechanism(s), including developing character codes into image data, is kept in a standby state. If the printing mechanisms are different, the print head configurations and the number of dots making up one character may be different, in which case it is desirable to provide each printing mechanism with its own character generator for developing character codes into image data. In the embodiment shown in FIG. 2, thermal printing mechanism 10 is provided with character generator 68 and wire dot printing mechanism 20 is provided with character generator 69. In this case character codes among the print data received are first converted to image data by the respective character generator 68, 69, are then stored in the common print buffer 67 and finally applied to the respective printing device 62, 64. Note that a third embodiment of the invention, not shown, may have the two separate print buffers of Fig. 1 and the two separate character generators of Fig. 2. Incidentally, except for the differences mentioned above, the embodiments of Figs. 1 and 2 are identical so that most of the foregoing explanation with respect to Fig. 1 applies to Fig. 2 in the same way and the following description applies to both figures except if stated otherwise.

When printing processing is performed by one of the printing mechanisms, controller 57 notifies processor 72, which serves both as error processing means and state determination means and is described below, that printing is in progress. This notification is performed by setting a corresponding print flag, for example. In order to keep the required power supply capacity at a minimum, printer 1 of the embodiments described above is controlled such that thermal printing mechanism 10 and wire dot printing mechanism 20 do not perform printing processing at the same time.

Printer 1 of the embodiments described above further has thermal printer state detector 65 and wire dot printer state detector 66 for detecting the states of thermal printing mechanism 10 and dot printing mechanism 20, respectively, by means of respective sensors. Thermal printer state detector 65 is configured to detect states such as opening and closing of cover 19 of thermal printing mechanism 10, paper jams and other errors, and, by means of near-end sensor 18 shown in FIG. 3, the end of a paper roll. Wire dot printer state detector 66 is configured to detect states such as opening and closing of cover 29 of wire dot printing mechanism 20, errors such as paper jams and overheating of print head 24, presence or absence of slip forms (by means of paper sensor 28 shown in FIG. 3), and the end of the ink ribbon (by ink ribbon sensor 22a shown in FIG. 3). The states detected by these state detectors are stored as status information in memory. The status information may be in the form of a number of status bytes similar to those more fully described in EP-A-0 652 533. Among the status is a first type of bytes specific to a particular one of the recording media listed in the table above, as well as a second type of byte such as an off-line cause status byte indicating the reason, if any, for an off-line state of the hybrid printer as represented by a busy signal.

While the number of status bytes and the particular information represented by them is not critical to the present invention, the distinction between the two types of state (or byte) is relevant for the hybrid printer. Status information relating to a particular recording medium is independent from which printing mechanism is currently selected. For instance, if near-end sensor 18 detects the end of thermal paper 12 being near, a corresponding bit in a customer receipt paper status byte will be set. Since the thermal paper is used only by the thermal printing mechanism 10, the information conveyed by this bit is independent of whether printing mechanism 10 or 20 is the selected printing mechanism. On the other hand, the off-line cause status byte may be different depending on which printing mechanism is selected. One bit of this byte may represent, for instance, the open/closed state of the cover. Another bit may indicate whether or not there is a mechanical problem, such as a paper jam, a carriage motion error etc.. Since each of the printing mechanisms 10 and 20 has its cover and in each of the printing mechanisms there may or may not be a paper jam, the information about this type of state is meaningful only in relation to a particular printing mechanism. Therefore, in an embodiment of the invention the information represented by this latter kind of byte is that for the selected one of the printing mechanisms (or second selected printing mechanism as will be explained later).

The status information is sent to the host device upon a status request command by the latter and automatically in response to a change in any of the detected states of or any of preselected ones of the detected states. When a cause for an off-line state occurs and a busy signal is output there may still be unprocessed data in receive buffer 54. In such case the status request command should be sent as a real-time command which is immediately executed rather than being queued in receive buffer 54 as mentioned above.

State detectors 65 and 66 transmit information to processor 72 every time when there is a change in any of those states of printing mechanisms 10 and 20. Processor 72 can judge the printing mechanism selected by printing mechanism selector 71. Therefore, processor 72 is able to determine the state of each printing mechanism 10 and 20 separately and also to determine whether or not a printing mechanism is printing by referencing the associated print flag. By this it becomes possible, if an error state occurs, to determine the error processing that should be performed in printer 1. For example, processor 72 will perform the following error processing according to the selected printing mechanism when it is detected that. the cover of either printing mechanism 10 or 20 has been opened.

### Mode 1. Thermal Printing Mechanism

When it has been detected that the cover (19) of thermal printing mechanism 10 has been opened while thermal printing mechanism 10 is selected and is performing printing processing, processing of the data in print buffer 61(or 67) after the cover is opened cannot be continued and processing of data received in receive buffer 54 cannot proceed. Therefore, printing is stopped, the printer is set off-line and a busy signal is output from busy signal generator 73, which prompts host device 2 via interface 51 to stop data transfer.. When the cover is closed, this is treated as an automatic error recovery and printing is automatically restarted from the line that was being printed and the busy signal is cleared.

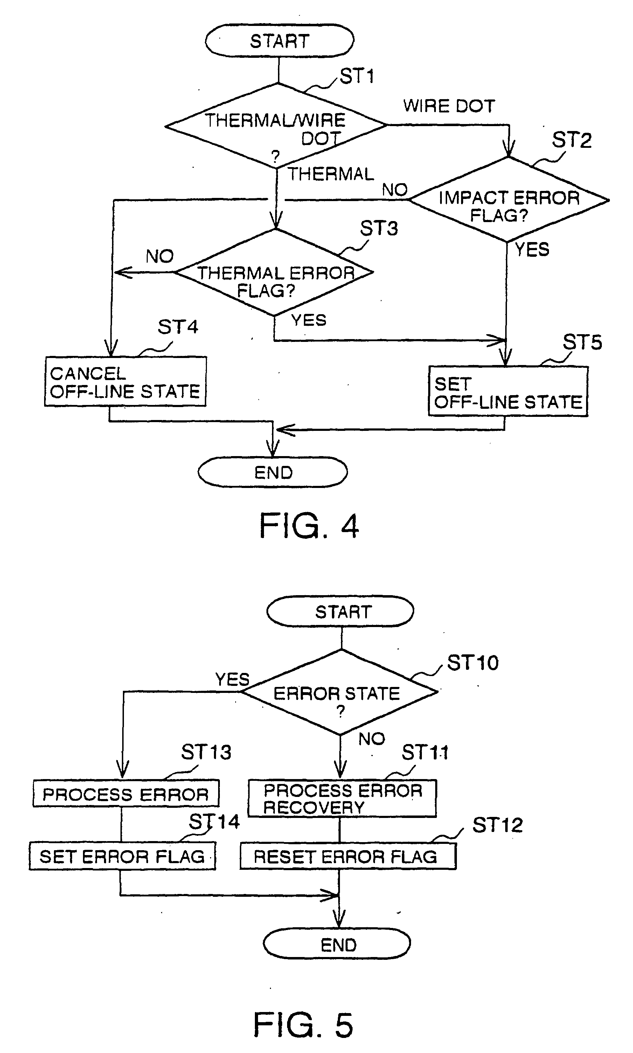

The above processing is described based on the flowchart in FIG. 5 illustrating a routine which is invoked either on a regular basis such as in response to a regular timer interrupt or in response to an interrupt caused by a state change. When an error state resulting from an open cover, for instance, is detected in ST10, an error processing is performed in ST13 and an error flag associated with the thermal printing mechanism is set in ST14. The error processing in step ST13 comprises stopping printing when thermal printing mechanism is printing as the error state is detected. When it is detected in ST10 that the cover has been closed and recovery from the error state has occurred, recovery processing that restarts printing is performed in ST11 and the error flag is reset in ST12.

The processing for setting the printer off-line is performed according to the flowchart shown in FIG. 4. That is, the selected printing mechanism is judged in ST1. When the thermal printing mechanism is selected, the thermal printer error flag is checked in ST3. If this flag is set, the off-line state is set in ST5. When the error flag is reset in ST3, the off-line state, if any, is canceled in ST4 and the on-line state is immediately set instead. Busy signal generator 73 responds to the off-line state by generating the busy signal sent to the host device via interface 51.

### Mode 2. Wire Dot Printing Mechanism

When an open cover (29) is detected in wire dot printing mechanism 20, on the other hand, and wire dot printing mechanism 20 is the selected printing mechanism and is performing printing processing, it is necessary to stop printing and retract print head 24 to the standby position in order to ensure correct printing processing. Therefore, data in print buffer 63 (or 67) can no longer be processed and processing of data received in receive buffer 54 cannot proceed. Therefore, like in mode 1, the printer is set off-line and a busy signal is output from busy signal generator 73, which prompts host device 2 via interface 51 to stop data transfer. Also, since wire dot printing mechanism 20 prints on slip forms, it may be necessary to set the form to the correct printing position since it may have been shifted while the cover was open. Therefore, even if the cover is closed, automatic recovery is not performed, rather this treated as a non-recoverable error, and printing is only resumed and the busy signal cleared when a reset command is sent from the host device.

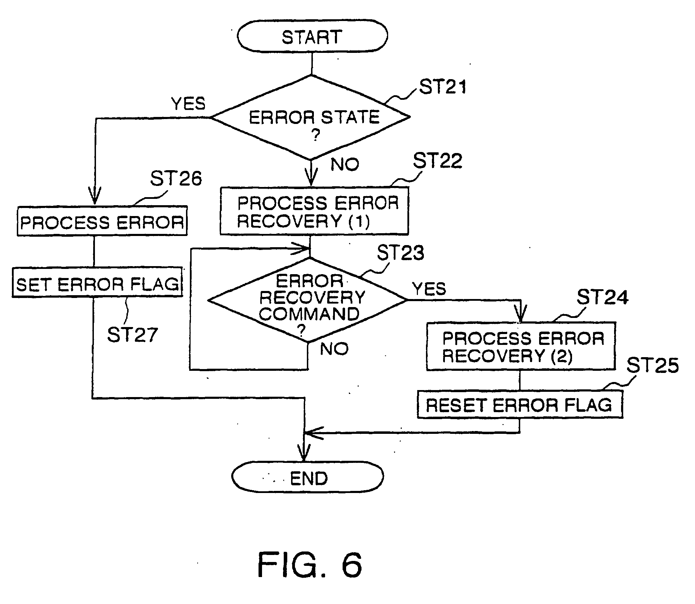

The above processing is shown in the flowchart in FIG. 6 illustrating a routine which is invoked in the same manner as that of Fig. 5. When an error state, an open cover in this example, is detected in ST21, an error processing is performed in ST26. An error flag associated with printing mechanism 20 is also set. If printing mechanism 20 is printing when the error state is detected, printing is stopped as a result of the error processing. When a closed cover is detected in ST21, known recovery processing such as detecting the home position of the carriage is performed. In ST23, the printer waits for an error recovery command to be sent from the host device, and after it is received, printing is restarted in ST24 and the error flag is reset in ST25.

The processing for setting the printer off-line is performed according to the flowchart in FIG. 4. That is, when the result in ST1 is that the wire dot printing mechanism is the selected printing mechanism, the error flag associated with this printing mechanism is checked in ST2. When the flag is set, the printer is set off-line in ST5. When the error flag is not set in ST2, the off-line state is canceled in ST4. That is, the on-line state is set instead.

As can be seen in the flowchart in FIG. 4, if an error flag is set for the non-selected printing mechanism, the host device is not notified of that state as an off-line state. That is, even if an open cover is detected in either thermal printing mechanism 10 or wire dot printing mechanism 20 and the associated error flag is set, no busy signal is output if the printer mechanism for which the error flag is set is not the selected printing mechanism.

There may be other reasons causing a busy signal to be output from busy signal generator 73 via interface 51 to the host device than those mentioned as examples above. Among those other reasons there are reasons, such as the receive buffer 54 being full, causing the busy signal to be output regardless of which printing mechanism is selected.

In the embodiments of the present invention described above, the state of each printing mechanism in the hybrid printer is detected, and error processing appropriate for the selected printing mechanism is quickly performed. Therefore, in addition to preventing problems specific to a particular printing mechanism such as a burned out print head, these embodiments allow the error processing optimum for the respective recording medium or paper to be performed.

Further, it is possible to select one among the printing mechanisms so that only the state of the selected printing mechanism and not that of the others causes a busy signal if required. In other words, in response to a paper selection command selecting customer receipt paper (or journal paper) printing mechanism selector 71 selects thermal printing mechanism 10 in which case a busy signal is output only when a cause for a busy signal occurs in thermal printing mechanism 10. On the other hand, when slip form paper (or validation forms) is selected, printing mechanism selector 71 selects wire dot printing mechanism 20 and a busy signal is output only when a cause for a busy signal occurs in wire dot printing mechanism 20. This makes it possible to efficiently utilize the printing mechanisms of the hybrid printer 1. For example, if the cover (19) is opened during printing by thermal printing mechanism 10, error processing appropriate to thermal printing mechanism is performed and a busy signal is output. In this mode 1, when a paper selection command that selects slip form paper is input from host device 2 as a real-time command, printing mechanism selector 71 selects wire dot printing mechanism 20. This results in the busy signal being canceled according to the flowchart shown in FIG. 4 and enables the transfer of data for slip form printing from host device 2 to hybrid printer 1 and slip form printing or its preparation. As described above, hybrid printer 1 makes it possible to effectively utilize a plurality of printing mechanisms by allowing a printing mechanism to be used normally even if a problem has occurred in another printing mechanism as long as the other printing mechanism is not the selected one. By means of the real-time commands it is possible to change the selection of a printing device even after a problem occurred in the previously selected printing device and caused a busy signal.

Since the hybrid printer of the embodiments explained above allows the detection of the state of each printing mechanism separately, appropriate error processing can be performed for a printing mechanism. Also, since the cause of a busy signal can be judged and a busy signal output for only the selected printing mechanism, if a printing mechanism not giving a cause for a busy signal is selected it can receive data from the host device and perform printing processing. Therefore, even if one printing mechanism cannot be used for whatever reason, it is still possible to use the other printing mechanism(s), thus making it possible to take full advantage of the functions of the hybrid printer.

In the explanation of the above embodiments an open cover has been used as an example of a cause for an error state, but the same is true for other factors or states such as overheating of the print head, a carriage malfunction, a cutting malfunction by the automatic cutter, if provided, and the detection of a paper out condition or a worn part condition. Since the various factors can be detected separately for each printing mechanism, the hybrid printer can be controlled by accurately selecting error processing suited to both the cause and to the printing mechanism.

In the above embodiments, the printing mechanism selection is realized by means of a control command (referred to as "paper selection command" herein) received from the host device and designating a recording medium to be printed and by referring to the look-up table shown and explained above. However, in this case, while printing on one recording medium, it is impossible for the host device to get status information of the other printing mechanism. A preferred embodiment of the invention solves this problem by providing two types of paper selection command. A first type of these paper selection commands selects the recording medium to be printed on and, by the recording medium, the printing mechanism to used for the printing processing. The second type of paper selection command selects the recording medium and, by the recording medium, the printing mechanism whose status information is sent to the host device. To distinguish between these two types of selection, a printing mechanism selected by the first type of paper selection command will be referred to as the "first selected" printing mechanism and a printing mechanism selected by the second type of paper selection command will be referred to as the "second selected" printing mechanism".

The information which printing mechanism is the first selected one and which is the second selected one is stored in memory. For the purpose of the following description it may be assumed that two variables, FIRST and SECOND, are stored to hold this information. In one embodiment both variables may be set independently, each in response to a respective one of the two types of paper selection command. In a preferred embodiment, however, when the printer receives the first type of paper selection command both variables are set in accordance with the recording medium designated by that command. If subsequently the second type of paper selection command is received, the variable SECOND is set in accordance with the recording medium designated by this latter command while the variable FIRST remains unchanged. In other words, the variable FIRST can be set and changed only by the first type of paper selection command while the variable SECOND is set and changed by each of the two types of command, i.e., reflects the last one of these two types of command. In response to the first type of paper selection command the first selected printing mechanism and the second selected printing mechanism are the same. In response to the second type of paper selection command the first selected printing mechanism and the second selected printing mechanism may be different ones.

The second type of paper selection command may be also used to designate a recording medium for which control values, such as line spacing, margins etc., are to be set. By utilizing this control command, the host device can get status information for one printing mechanism (the second selected printing mechanism) and then set or alter the control values to be used for controlling this printing mechanism to perform printing on the recording medium designated by the command while the other printing mechanism (the first selected one) is printing on another recording medium.

Referring again to Fig. 4, it has been mentioned that in step ST1 the selected printing mechanism is judged. For the reasons mentioned above, the "selected" printing mechanism here means the "first selected" printing mechanism in the embodiment using two types of paper selection command. There may be cases, however, where it is desirable that the on-line/off-line state (as represented by absence/presence of the busy signal) represents the state of the printing mechanism whose status information is reported to the host device. Therefore, within the scope of the present invention it is also possible to have the above mentioned second type of paper selection command not only select the printing mechanism whose status information is to be sent to the host device, but select this printing mechanism also as the one controlling the on-line/off-line state of the hybrid printer, i.e., the one judged to be the selected printing mechanism in step ST1 in Fig. 4.

While the invention has been explained above with reference to a hybrid printer comprising two printing mechanisms, it will be appreciated by those skilled in the art that the principles explained can be used in substantially the same way for a hybrid printer comprising three or more printing mechanisms.

## Claims

1. A hybrid printer comprising:
a plurality of independent printing mechanisms (10, 20) for performing printing processing based on data received from a host device (2), each printing mechanism having its own print head (11, 24) and being adapted to print on a respective one or respective ones of a plurality of types of recording media (12, 25),
selection means (71) responsive to a predetermined control command among said data for selecting one of said printing mechanisms,
**characterized by**:
a plurality of state detection means (65, 66) each associated with a respective one of said printing mechanisms for detecting state information of that printing mechanism, and
state processing means (51, 72, 73) responsive to said selection means for processing the state information of that one of said plurality of state detection means associated with the printing mechanism selected by said selection means.

2. The printer according to claim 1 wherein said selection means (71) includes a correspondence table that stores the correspondence between said printing mechanisms (10, 20) and said plurality of types of recording medium (12, 25) and is responsive to a recording medium selection command for selecting, in accordance with said table, the printing mechanism adapted to perform printing processing on the recording medium selected by said recording medium selection command.

3. The printer according to claim 1 or 2 wherein said state processing means (51, 72, 73) comprises state notification means (51) for notifying said host device of the state information of the selected printing mechanism (10, 20).

4. The printer according to claim 3 wherein said state information detected by said plurality of state detection means (65, 66) comprise a first type of state relevant only for a respective one of said printing mechanisms (10, 20) and a second type of state relevant for each printing mechanism, wherein said notifying means (51) is adapted to notify said host device of said first type of state from each of said plurality of detection means and of said second type of state only from the detection means associated with the selected printing mechanism.

5. The printer according to any one of the preceding claims wherein said printing processing is performed by said selected printing mechanism (10, 20).

6. The printer according to any one of the preceding claims wherein said state processing means (51, 72, 73) further comprises means for setting said printer into an off-line state in response to an error state being detected for said selected printing mechanism (10, 20) while not setting said printer into an off-line state in response to an error state being detected for a non-selected printing mechanism (10, 20).

7. The printer according to claim 3 or 4 wherein said selection means (71) is responsive to a first control command for selecting a first one of said printing mechanisms (10, 20) to perform said printing processing and responsive to a second control command for selecting a second one of said printing mechanisms, wherein said state information notified by said notifying means includes the state information of the first selected printing mechanism when no second printing mechanism has been selected and of the second selected printing mechanism when a second printing mechanism has been selected.

8. The printer according to claims 6 and 7 wherein said means for setting said printer into an off-line state is responsive to an error state being detected for said first selected printing mechanism (10, 20).

9. The printer according to any one of the preceding claims further comprising error processing means (72) responsive to an error state for performing error processing with respect to and adapted to the printing mechanism (10, 20) for which the error state is detected.

10. The printer according to any one of claims 3 to 9 wherein said state notification means (51) is an interface circuit that manifests an off-line or on-line state.

11. A method of controlling a hybrid printer having a plurality of independent printing mechanisms (10, 20) for performing printing processing based on data received from a host device (2), each printing mechanism having its own print head (11, 24) and being adapted to print on a respective one or respective ones of a plurality of types of recording medium (12, 25), the method comprising the step of:
(a) selecting, in response to a predetermined control command among said data, one of said printing mechanisms,
and being **characterized by** the further steps of:
(b) obtaining independently for each printing mechanism state information of that printing mechanism, and
(c) processing the state information of only that one of said printing mechanism selected by said selection means.

12. The method according to claim 11 wherein step (a) comprises
(a1) receiving a recording medium selection control command designating one of said plurality of types recording medium, and
(a2) retrieving from a correspondence table that stores the correspondence between said printing mechanisms (10, 20) and said plurality of types of recording medium (12, 25) the printing mechanism corresponding to the designated type of recording medium, and selecting that printing mechanism.

13. The method according to claim 11 or 12 wherein step (c) comprises notifying said host device of the state information of the selected printing mechanism (10, 20).

14. The method according to claim 13 wherein step (b) comprises detecting a first type of state relevant only for a respective one of said printing mechanisms (10, 20) and a second type of state relevant for each printing mechanism, and step (c) comprises notifying said host device of said first type of state-for each of said respective printing mechanisms and of said second type of state only for the selected printing mechanism.

15. The method according to any one of claims 11 to 14, wherein said printing processing is performed by said selected printing mechanism.

16. The method according to any one of claims 11 to 15 wherein step (c) further comprises setting said printer into an off-line state in response to an error state being detected for said selected printing mechanism (10, 20).

17. The method according to claim 13 or 14 wherein step (a) comprises selecting, in response to a first control command, a first one of said printing mechanisms (10, 20) to perform said printing processing and selecting, in response to a second control command, a second one of said printing mechanisms, wherein step (c) comprises notifying said host device of the state information of the first selected printing mechanism when no second printing mechanism has been selected and of the second selected printing mechanism when a second printing mechanism has been selected.

18. The method according to claims 16 and 17 wherein said setting of said printer into an off-line state is in response to an error state being detected for said selected printing mechanism (10, 20).

19. The method according to any one of claims 11 to 18 further comprising a step of performing error processing with respect to and adapted to the printing mechanism (10, 20) for which an error state is detected in step (b).

## Patentansprüche

1. Hybriddrucker mit:
einer Mehrzahl unabhängiger Druckwerke (10, 20) zum Durchführen von Druckvorgängen auf der Grundlage von von einer Hostvorrichtung (2) empfangenen Daten, wobei jedes Druckwerk seinen eigenen Druckkopf (11, 24) hat und ausgebildet ist, eine jeweilige oder mehrere jeweilige einer Mehrzahl von Arten von Aufzeichnungsträgern (12, 25) zu bedrucken,
einer Auswahleinrichtung (71), die auf einen vorherbestimmten Steuerbefehl unter den Daten anspricht, um eines der Druckwerke auszuwählen, **gekennzeichnet durch**:
eine Mehrzahl von Zustandserfassungseinrichtungen (65, 66), die je einem jeweiligen der Druckwerke zugeordnet sind und Zustandsinformationen des Druckwerks erfassen, und
Zustandsverarbeitungseinrichtungen (51, 72, 73), die auf die Auswahleinrichtung ansprechen und die Zustandsinformation der einen der Mehrzahl von Zustandserfassungseinrichtungen verarbeiten, die dem mittels der Auswahleinrichtung ausgewählten Druckwerk zugeordnet ist.

2. Drucker nach Anspruch 1, bei dem die Auswahleinrichtung (71) eine Korrespondenztabelle umfaßt, in der die Zuordnung zwischen den Druckwerken (10, 20) und der Mehrzahl von Arten von Aufzeichnungsträgern (12, 25) gespeichert ist, und die auf einen Aufzeichnungsträgerauswahlbefehl anspricht, um entsprechend der Tabelle das Druckwerk auszuwählen, welches ausgebildet ist, auf dem vom Aufzeichnungsträgerauswahlbefehl ausgewählten Aufzeichnungsträger den Druckvorgang durchzuführen.

3. Drucker nach Anspruch 1 oder 2, bei dem die Zustandsverarbeitungseinrichtung (51, 72, 73) eine Zustandsbenachrichtigungseinrichtung (51) aufweist, mittels der die Hostvorrichtung über die Zustandsinformation des ausgewählten Druckwerks (10, 20) benachrichtigt wird.

4. Drucker nach Anspruch 3, bei dem die mittels der Mehrzahl von Zustandserfassungseinrichtungen (65, 66) erfaßten Zustandsinformationen eine erste Art von Zustand, der nur für ein jeweiliges der Druckwerke (10, 20) relevant ist, und eine zweite Art von Zustand aufweisen, der für jedes Druckwerk relevant ist, wobei die Benachrichtigungseinrichtung (51) ausgebildet ist, die Hostvorrichtung über die erste Art von Zustand von jeder der Mehrzahl von Erfassungseinrichtungen und über die zweite Art von Zustand nur von der dem ausgewählten Druckwerk zugeordneten Erfassungseinrichtung zu benachrichtigen.

5. Drucker nach einem der vorhergehenden Ansprüche, bei dem der Druckvorgang von dem ausgewählten Druckwerk (10, 20) durchgeführt wird.

6. Drucker nach einem der vorhergehenden Ansprüche, bei dem die Zustandsverarbeitungseinrichtung (51, 72, 73) ferner eine Einrichtung aufweist, die den Drucker in Abhängigkeit von der Erfassung eines Fehlerzustands bei dem ausgewählten Druckwerk (10, 20) in einen Offline-Zustand setzt, während sie den Drucker in Abhängigkeit von der Erfassung eines Fehlerzustands bei einem nicht ausgewählten Druckwerk (10, 20) nicht in einen Offline-Zustand setzt.

7. Drucker nach Anspruch 3 oder 4, bei dem die Auswahleinrichtung (71) auf einen ersten Steuerbefehl zur Auswahl eines ersten der Druckwerke (10, 20) zum Durchführen des Druckvorganges anspricht und auf einen zweiten Steuerbefehl zur Auswahl eines zweiten der Druckwerke anspricht, wobei die von der Benachrichtigungseinrichtung mitgeteilte Zustandsinformation die Zustandsinformation des ersten ausgewählten Druckwerks umfaßt, wenn kein zweites Druckwerk ausgewählt wurde, und die des zweiten ausgewählten Druckwerks, wenn ein zweites Druckwerk ausgewählt wurde.

8. Drucker nach Anspruch 6 und 7, bei dem die Einrichtung, die den Drucker in einen Offline-Zustand setzt, darauf anspricht, daß ein Fehlerzustand bei dem ersten ausgewählten Druckwerk (10, 20) erfaßt wird.

9. Drucker nach einem der vorhergehenden Ansprüche, ferner mit einer Fehlerverarbeitungseinrichtung (72), die auf einen Fehlerzustand anspricht und eine Fehlerverarbeitung in Bezug auf und geeignet für das Druckwerk (10, 20) durchführt, bei dem der Fehlerzustand erfaßt wird.

10. Drucker nach einem der Ansprüche 3 bis 9, bei dem die Zustandsbenachrichtigungseinrichtung (51) eine Schnittstellenschaltung ist, die einen Offline-Zustand oder einen Online-Zustand bekundet.

11. Verfahren zum Steuern eines Hybriddruckers, der eine Mehrzahl unabhängiger Druckwerke (10, 20) umfaßt, um einen Druckvorgang auf der Grundlage von von einer Hostvorrichtung (2) empfangenen Daten durchzuführen, wobei jedes Druckwerk seinen eigenen Druckkopf (11, 24) hat und ausgebildet ist, einen jeweiligen oder jeweilige einer Mehrzahl von Arten von Aufzeichnungsträgern (12, 25) zu bedrucken, wobei das Verfahren den Schritt aufweist:
(a) Auszuwählen eines der Druckwerke in Abhängigkeit von einem vorherbestimmten Steuerbefehl unter den Daten, und **gekennzeichnet ist durch** die weiteren Schritte:
(b) Erhalten, unabhängig für jedes Druckwerk, von Zustandsinformation über das jeweilige Druckwerk, und
(c) Verarbeiten der Zustandsinformation nur von dem **durch** die Auswahleinrichtung ausgewählten Druckwerk.

12. Verfahren nach Anspruch 11, bei dem der Schritt (a) aufweist:
(a1) Empfangen eines Steuerbefehls zur Aufzeichnungsträgerauswahl, der einen der Mehrzahl von Arten von Aufzeichnungsträgern bezeichnet, und
(a2) Entnehmen, aus einer Korrespondenztabelle, in der die Zuordnung zwischen den Druckwerken (10, 20) und der Mehrzahl von Arten des Aufzeichnungsträgers (12, 25) gespeichert ist, des Druckwerks, welches der bezeichneten Art von Aufzeichnungsträger entspricht, und Auswählen dieses Druckwerks.

13. Verfahren nach Anspruch 11 oder 12, bei dem der Schritt (c) umfaßt, die Hostvorrichtung über die Zustandsinformation des ausgewählten Druckwerks (10, 20) zu benachrichtigen.

14. Verfahren nach Anspruch 13, bei dem der Schritt (b) umfaßt, Erfassen einer ersten Art eines Zustands, der nur für ein jeweiliges der Druckwerke (10, 20) relevant ist, und einer zweiten Art von Zustand, der für jedes Druckwerk relevant ist, und der Schritt (c) umfaßt, Benachrichtigen der Hostvorrichtung über die erste Art von Zustand jedes der jeweiligen Druckwerke und über die zweite Art von Zustand nur für das ausgewählte Druckwerk zu .

15. Verfahren nach einem der Ansprüche 11 bis 14, bei dem der Druckvorgang von dem ausgewählten Druckwerk durchgeführt wird.

16. Verfahren nach einem der Ansprüche 11 bis 15, bei dem der Schritt (c) ferner umfaßt, den Drucker in Abhängigkeit davon in den Offline-Zustand zu setzen, daß für das ausgewählte Druckwerk (10, 20) ein Fehlerzustand erfaßt wird.

17. Verfahren nach Anspruch 13 oder 14, bei dem der Schritt (a) umfaßt, in Abhängigkeit von einem ersten Steuerbefehl ein erstes der Druckwerke (10, 20) für die Durchführung des Druckvorganges auszuwählen, und in Abhängigkeit von einem zweiten Steuerbefehl ein zweites der Druckwerke auszuwählen, und bei dem der Schritt (c) umfaßt, die Hostvorrichtung über die Zustandsinformation des ersten ausgewählten Druckwerks zu benachrichtigen, wenn kein zweites Druckwerk ausgewählt wurde, und über das zweite ausgewählte Druckwerk, wenn ein zweites Druckwerk ausgewählt wurde.

18. Verfahren nach Anspruch 16 und 17, bei dem das Setzen des Druckers in einen Offline-Zustand als Reaktion auf einen für das ausgewählte Druckwerk (10, 20) erfaßten Fehlerzustand geschieht.

19. Verfahren nach einem der Ansprüche 11 bis 18, ferner mit einem Schritt des Durchführens einer Fehlerverarbeitung in Bezug auf und geeignet für das Druckwerk (10, 20), bei dem im Schritt (b) ein Fehlerzustand erfaßt wird.

## Revendications

1. Imprimante hybride comprenant :
une pluralité de mécanismes d'impression (10, 20) indépendants destinés à exécuter une impression basée sur des données reçues depuis un dispositif hôte (2), chaque mécanisme d'impression ayant sa propre tête d'impression (11, 24) et étant adapté pour imprimer sur un ou plusieurs types respectifs d'une pluralité de types de supports d'enregistrement (12, 25),
un moyen de sélection (71) sensible à une instruction de commande prédéterminée incluse dans les données de façon à sélectionner l'un des mécanismes d'impression, **caractérisée par** :
une pluralité de moyens de détection d'état (65, 66), associés chacun à l'un respectif des mécanismes d'impression afin de détecter des informations d'état relatives à ce mécanisme d'impression, et
des moyens de traitement d'état (51, 72, 73) sensibles au moyen de sélection afin de traiter les informations d'état dudit moyen de détection de la pluralité de moyens de détection d'état associé au mécanisme d'impression sélectionné par le moyen de sélection.

2. Imprimante selon la revendication 1, dans laquelle le moyen de sélection (71) comprend une table de correspondance qui mémorise la correspondance entre les mécanismes d'impression (10, 20) et la pluralité de types de supports d'enregistrement (12, 25) et est sensible à une commande de sélection de support d'enregistrement pour sélectionner, en fonction de la table, le mécanisme d'impression adapté pour imprimer sur le support d'enregistrement sélectionné par la commande de sélection de support d'enregistrement.

3. Imprimante selon la revendication 1 ou 2, dans laquelle les moyens de traitement d'état (51, 72, 73) comprennent un moyen d'indication d'état (51) destiné à communiquer au dispositif hôte les informations d'état relatives au mécanisme d'impression (10, 20) sélectionné.

4. Imprimante selon la revendication 3, dans laquelle les informations d'état détectées par la pluralité de moyens de détection d'état (65, 66) comprennent un premier type d'état concernant uniquement l'un respectif des mécanismes d'impression (10, 20) et un deuxième type d'état concernant chaque mécanisme d'impression, dans laquelle le moyen d'indication d'état (51) est adapté pour communiquer au dispositif hôte le premier type d'état provenant de chaque moyen de la pluralité de moyens de détection et le deuxième type d'état provenant uniquement du moyen de détection associé au mécanisme d'impression sélectionné.

5. Imprimante selon l'une quelconque des revendications précédentes, dans laquelle l'impression est exécutée par le mécanisme d'impression (10, 20) sélectionné.

6. Imprimante selon l'une quelconque des revendications précédentes, dans laquelle les moyens de traitement d'état (51, 72, 73) comprennent en outre un moyen pour régler l'imprimante en état hors ligne en réponse à un état d'erreur détecté pour le mécanisme d'impression (10, 20) sélectionné et simultanément pour ne pas régler l'imprimante en état hors ligne en réponse à un état d'erreur détecté pour un mécanisme d'impression (10, 20) non sélectionné.

7. Imprimante selon la revendication 3 ou 4, dans laquelle le moyen de sélection (71) est sensible à une première instruction de commande pour sélectionner un premier desdits mécanismes d'impression (10, 20) pour exécuter l'impression et sensible à une deuxième instruction de commande pour sélectionner un deuxième desdits mécanismes d'impression, dans laquelle les informations d'état communiquées par le moyen d'indication incluent les informations d'état relatives au premier mécanisme d'impression sélectionné quand aucun deuxième mécanisme d'impression n'a été sélectionné et relatives au deuxième mécanisme d'impression sélectionné quand un deuxième mécanisme d'impression a été sélectionné.

8. Imprimante selon les revendications 6 et 7, dans laquelle le moyen destiné à régler l'imprimante en état hors ligne est sensible à un état d'erreur détecté pour le premier mécanisme d'impression (10, 20) sélectionné.

9. Imprimante selon l'une quelconque des revendications précédentes, comprenant en outre un moyen de traitement d'erreur (72) sensible à un état d'erreur pour exécuter un traitement d'erreur par rapport et adapté au mécanisme d'impression (10, 20) pour lequel l'état d'erreur est détecté.

10. Imprimante selon l'une quelconque des revendications 3 à 9, dans laquelle le moyen d'indication d'état (51) est un circuit d'interface qui présente un état hors ligne ou en ligne.

11. Procédé pour commander une imprimante hybride comprenant une pluralité de mécanismes d'impression (10, 20) indépendants destinés à exécuter une impression basée sur des données reçues depuis un dispositif hôte (2), chaque mécanisme d'impression ayant sa propre tête d'impression (11, 24) et étant adapté pour imprimer sur un ou plusieurs types respectifs d'une pluralité de types de supports d'enregistrement (12, 25), le procédé comprenant l'étape consistant à :
(a) sélectionner, en réponse à une instruction de commande prédéterminée incluse dans les données, l'un des mécanismes d'impression, et étant **caractérisé par** les étapes supplémentaires consistant à :
(b) obtenir indépendamment pour chaque mécanisme d'impression les informations d'état relatives au mécanisme d'impression concerné, et
(c) traiter les informations d'état correspondant uniquement audit mécanisme d'impression sélectionné par le moyen de sélection.

12. Procédé selon la revendication 11, dans lequel l'étape (a) comprend
(a1) la réception d'une instruction de commande de sélection de support d'enregistrement désignant un type de la pluralité de types de supports d'enregistrement, et
(a2) la recherche, à partir d'une table de correspondance, qui stocke la correspondance entre les mécanismes d'impression (10, 20) et la pluralité de types de supports d'enregistrement (12, 25), du mécanisme d'impression correspondant au type désigné de support d'enregistrement et la sélection de ce mécanisme d'impression.

13. Procédé selon la revendication 11 ou 12, dans lequel l'étape (c) comprend le fait de communiquer au dispositif hôte les informations d'état relatives au mécanisme d'impression (10, 20) sélectionné.

14. Procédé selon la revendication 13, dans lequel l'étape (b) comprend le fait de détecter un premier type d'état concernant uniquement l'un respectif des mécanismes d'impression (10, 20) et un deuxième type d'état concernant chaque mécanisme d'impression, et l'étape (c) comprend le fait de communiquer au dispositif hôte le premier type d'état pour chacun des mécanismes d'impression respectifs et le deuxième type d'état uniquement pour le mécanisme d'impression sélectionné.

15. Procédé selon l'une quelconque des revendications 11 à 14, dans lequel l'impression est exécutée par le mécanisme d'impression sélectionné.

16. Procédé selon l'une quelconque des revendications 11 à 15, dans lequel l'étape (c) comprend en outre le réglage de l'imprimante en état hors ligne en réponse à un état d'erreur détecté pour le mécanisme d'impression (10, 20) sélectionné.

17. Procédé selon la revendication 13 ou 14, dans lequel l'étape (a) comprend le fait de sélectionner, en réponse à une première instruction de commande, un premier desdits mécanismes d'impression (10, 20) pour exécuter l'impression et de sélectionner, en réponse à une deuxième instruction de commande, un deuxième desdits mécanismes d'impression, dans lequel l'étape (c) comprend le fait de communiquer au dispositif hôte les informations d'état relatives au premier mécanisme d'impression sélectionné quand aucun deuxième mécanisme d'impression n'a été sélectionné et relatives au deuxième mécanisme d'impression sélectionné quand un deuxième mécanisme d'impression a été sélectionné.

18. Procédé selon les revendications 16 et 17, dans lequel le réglage de l'imprimante en état hors ligne est effectué en réponse à un état d'erreur détecté pour le mécanisme d'impression (10, 20) sélectionné.

19. Procédé selon l'une quelconque des revendications 11 à 18, comprenant en outre une étape consistant à exécuter un traitement d'erreur par rapport et adapté au mécanisme d'impression (10, 20) pour lequel un état d'erreur est détecté à l'étape (b).
